# EUROPEAN PATENT SPECIFICATION

(11) **EP 3 848 331 B1**
(45) Date of publication and mention of the grant of the patent: **30.04.2025**
(21) Application number: 20776475.4
(22) Date of filing: 22.05.2020
(51) Int. Cl.: C02F 1/44, C02F 1/461, C25B 1/04, C02F 1/52, C02F 1/04, C02F 1/66, C02F 103/08, B01D 61/02, B01D 61/06

(54) **DESALINATION METHOD CAPABLE OF PRODUCING HYDROGEN**
ENTSALZUNGSVERFAHREN MIT FÄHIGKEIT ZUR WASSERSTOFFERZEUGUNG
MÉTHODE DE DESSALEMENT CAPABLE DE PRODUIRE DE L'HYDROGÈNE

(30) Priority: 25.03.2019 KR 20190033654
(43) Date of publication of application: 14.07.2021
(73) Proprietor: Korea University Research and Business Foundation, Seoul 02841 (KR)
(72) Inventor: HONG, Seung-Kwan, Yongin-si, Gyeonggi-do 16951 (KR); KIM, Jung-Bin, Seoul 06697 (KR); CHOI, Jong-Moon, Seoul 05571 (KR); PARK, Ki-Ho, Seoul 02473 (KR)
(74) Representative: Impuls legal
(86) International application number: PCT/IB2020/054866
(87) International publication number: WO 2020/194284

(56) References cited:
- WO-A1-2009/152148
- WO-A1-2014/006741
- WO-A1-2016/047257
- WO-A1-2016/047257
- WO-A1-2019/036676
- KR-A- 20110 015 354
- KR-A- 20130 134 078
- KR-A- 20160 087 791
- KR-A- 20170 123 488
- KR-B1- 101 206 582
- US-A1- 2013 193 002
- US-A1- 2017 206 991
- US-B1- 6 261 464

## Description

### BACKGROUND OF THE INVENTION

### Field of the Invention

The present invention relates generally to a method for desalination for enabling hydrogen production. More particularly, the present invention relates to a method for desalination for enabling hydrogen production, the desalination process being capable of producing hydrogen gas, which is a future energy source, from concentrated water conventionally discharged as a water stream in a seawater desalination process.

### Description of the Related Art

Seawater accounts for a majority of the water on the earth, but seawater is too salty and cannot be used as domestic or industrial water. It is necessary to convert seawater to freshwater to replenish insufficient inland water and to solve problems such as shortage and depletion of freshwater. Desalination collectively refers to desalting to remove mineral components and deionization to remove ions, and is also referred to as seawater desalination.

Examples of a seawater desalination method include reverse osmosis and electrodialysis using membranes, distillation by which seawater is converted into steam and desalinated (multi-stage flash distillation, multiple-effect distillation, vapor-compression), and other methods such as freezing and solar distillation. However, distillation and reverse osmosis are the mainly used seawater desalination methods.

Of these, seawater desalination by reverse osmosis is a process by which ionic substances dissolved in seawater are rejected by a semi-permeable membrane allowing pure water to pass therethrough while not allowing ionic substances dissolved in water to pass therethrough.

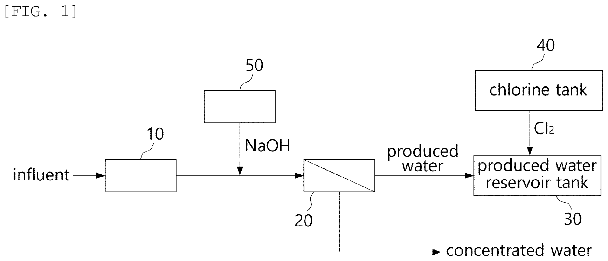

In FIG. 1, a seawater desalination process by reverse osmosis is schematically illustrated.

Referring to FIG. 1, the seawater desalination process by reverse osmosis is divided into a pre-treatment process, a reverse osmosis process, and a post-treatment process.

Referring further to FIG. 1, seawater is supplied to a reverse osmosis unit 20 after foreign matter and/or suspended matter is rejected by a pre-treatment unit 10. The seawater flowing into the reverse osmosis unit 20 is separated into concentrated water(water stream) containing concentrated salt and produced water with salt removed, with a reverse osmosis membrane interposed therebetween, under a high pressure of approximately 42 to 60 bar.

The produced water with salt removed is supplied to a produced water reservoir tank 30. The produced water to be used undergoes sterilization by use of chlorine gas. The concentrated water is water remaining after the produced water is produced from seawater. The concentrated water thus has a high salinity and is under a high pressure. The concentrated water is passed through an energy recovery unit to transfer high pressure to influent and then discharged to sea under a reduced pressure.

A chemical supply unit 50 injects a pH control solution and a scaling inhibitor to the reverse osmosis unit 20.

Seawater contains substances such as boron and silica, but the concentration of boron and silica in the produced water that has undergone seawater desalination has to be low. In particular, boron is toxic and has to be removed so that the concentration thereof is equal to or less than a safe concentration.

In order to increase the removal rate of certain substances such as boron or silica, water quality conditions of equal to or greater than a pH of 9 are required. Thus, in the reverse osmosis process, sodium hydroxide is injected to increase the pH of seawater. However, scaling is likely to occur at high pH, and thus a scaling inhibitor has to be injected in conjunction therewith.

Further, in the reverse osmosis process, carbon dioxide dissolved in water is not removed through the reverse osmosis membrane. However, when the pH of carbon dioxide is adjusted to approximately 8.2 by use of sodium hydroxide, carbon dioxide is converted into bicarbonate ions that are removable through the reverse osmosis membrane.

Due to the fact that the reverse osmosis process removes carbonate ions and bicarbonate ions, the alkalinity of the produced water is low. Thus, the pH of the influent may be lowered to undergo the reverse osmosis process in the form of carbon dioxide, and then the pH thereof is raised in the post-treatment process to recover alkalinity. In this case, sodium hydroxide is used. Accordingly, the above-described seawater desalination process by reverse osmosis according to the related art requires a continuous consumption of chemicals such as sodium hydroxide and a scaling inhibitor.

Further, the produced water is supplied through a pipe network. In this case, in order to prevent contamination of the produced water due to generation of microorganisms, the produced water has to undergo chlorination. A chlorine tank 40 is connected to the produced water reservoir tank 30 and provides chlorine gas to the produced water reservoir tank 30 to disinfect the produced water. Accordingly, there arises an additional cost for disinfection using chlorine.

In the seawater desalination process according to the related art, the concentrated water is not used but discharged in the post-treatment process. As described above, the concentrated water that has undergone the reverse osmosis process has a very high salinity. If the high-salinity concentrated water is discharged directly to sea without dilution, this causes a negative effect on marine environments.

The foregoing is intended merely to aid in the understanding of the background of the present invention, and is not intended to mean that the present invention falls within the purview of the related art that is already known to those skilled in the art.

### Documents of Related Art

Korean Patent No. 10-1526299 for example concerns a plant-forward osmosis hybrid desalination system and method.

WO2016047257A1 illustrates for example an electrolyzed water-generating device that is equipped with an electrolysis tank in which an electrolysis chamber, into which the water to be electrolyzed flows, is formed. An anode power supplier and a cathode power supplier are disposed facing each other inside the electrolysis chamber. A diaphragm is disposed between the anode power supplier and the cathode power supplier and is for dividing the electrolysis chamber into an anode power supplier -side anode chamber and a cathode power supplier -side cathode chamber. A reverse osmosis membrane module has a reverse osmosis membrane for filtering the water. A concentrate-supplying water channel is supplying concentrate discharged from the reverse osmosis membrane module to the anode chamber.

US 2013/193002 A1 relates to an apparatus for producing electrolytic reduced water capable of improving the sterilization performance and a control method thereof, the apparatus including an electrolytic cell configured to produce electrolytic reduced water by electrolyzing purified water that is penetrated through a reverse osmosis filter of a water purifying unit, a water storage tank configured to store the electrolytic reduced water, a sterilization electrolytic cell configured to produce sterilization water by electrolyzing reverse osmosis waste water that is discharged from the water purifying unit

### SUMMARY OF THE INVENTION

The present invention relates to a method for desalination for enabling hydrogen production, the method comprising:
a desalination process using a desalination process unit (110) in which influent is water-treated through a reverse osmosis process to produce produced water and concentrated water; and
a chlor-alkali process using a chlor-alkali process unit (150) having an interior space partitioned into an anode section (151) to which the concentrated water is supplied and a cathode section (155, 156) to which the produced water is supplied,
wherein the chlor-alkali process unit (150) uses solar electrical energy to generate chlorine gas from salt of the concentrated water through a chemical reaction at the anode section (151) with the concentrated water as an electrolyte, and generate hydrogen gas and sodium hydroxide through a chemical reaction at the cathode section (155, 156) with the produced water as an electrolyte, further comprising:
   a concentration process using a concentration process unit (120) provided between the desalination process using a desalination process unit (110) and the chlor-alkali process unit (150), and water-treating the concentrated water through a distillation process to produce a second concentrated water concentrated to a higher salinity than the concentrated water, and a second produced water that results from removal of the salt from the concentrated water, further comprising:
   a precipitation process unit (130) provided between the concentration process unit (120) and the chlor-alkali process unit (150), injecting the sodium hydroxide into the second concentrated water supplied from the concentration process unit (120), and water-treating the second concentrated water through a precipitation reaction to produce a third concentrated water with divalent cations removed, further comprising:
   a concentrated water pre-treatment unit (140) provided between the precipitation process unit (130) and the chlor-alkali process unit (150), injecting hydrochloric acid to the third concentrated water supplied from the precipitation process unit (130), and water-treating the third concentrated water to produce a fourth concentrated water having a lower pH than the third concentrated water, wherein the chlor-alkali process unit (150) receives the fourth concentrated water from the concentrated water pre-treatment unit (140)to the anode section (151), generates the chlorine gas in the fourth concentrated water through the chemical reaction at the anode section (151) with the fourth concentrated water as an electrolyte, and discharges diluted concentrated water that results from removal of the salt from the fourth concentrated water to the concentrated water pre-treatment unit (140).

In an embodiment the method further comprises: a produced water reservoir tank (190) storing the produced water received from the desalination process unit (110); a chlorine tank (165) storing the chlorine gas supplied from the anode section (151), and connected to the produced water reservoir tank (190) to supply the chlorine gas to the produced water reservoir tank (190); a hydrogen tank (163) storing the hydrogen gas supplied from the cathode section (155, 156); and an NaOH tank (161) storing the sodium hydroxide generated through the chemical reaction at the cathode section (155, 156), and supplying the sodium hydroxide to the produced water introduced into the cathode section (155, 156), wherein the chlorine gas is supplied to the produced water reservoir tank (190) to disinfect the produced water, and the sodium hydroxide controls a pH of the produced water introduced into the cathode section (155, 156).

Optionally, the process comprises: a hydrochloric acid reaction unit (170) individually connected to the chlorine tank (165) and the hydrogen tank (163), and producing hydrochloric acid through a chemical reaction between the supplied chlorine gas and hydrogen gas; and a hydrochloric acid tank (180) storing the hydrochloric acid, and connected to the concentrated water pre-treatment unit (140)to supply the hydrochloric acid to the concentrated water pre-treatment unit (140).

In an embodiment, the method is a process wherein at the cathode section (155, 156), the produced water is electrolyzed into the hydrogen gas and hydroxyl groups (OH-) to produce the hydrogen gas, and the sodium hydroxide is produced by a chemical reaction between sodium ions resulting from decomposition of the salt of the concentrated water, and the hydroxyl groups (OH-).

In a further embodiment, the desalination method is a process, wherein the desalination process unit (110) comprises: a reverse osmosis process unit (112) in which the influent is separated into the produced water and the concentrated water by means of high pressure as the reverse osmosis process is performed; and
an energy recovery unit (113) connected to the reverse osmosis process unit (112) and the concentration process unit (120), receiving the concentrated water from the reverse osmosis process unit (112) to transfer a pressure of the concentrated water to the influent, and providing the concentrated water with reduced pressure to the concentration process unit (120).

### BRIEF DESCRIPTION OF THE DRAWINGS

The above and other objectives, features, and other advantages of the present invention will be more clearly understood from the following detailed description when taken in conjunction with the accompanying drawings, in which:
FIG. 1 is a view schematically illustrating a seawater desalination process according to the related art;
FIG. 2 is a block diagram illustrating a desalination system for enabling hydrogen production according to a first embodiment of the present invention;
FIG. 3 is a water treatment flowchart of a desalination process unit according to the first embodiment of the present invention;
FIG. 4 is a water treatment flowchart of a concentration process unit according to the first embodiment of the present invention;
FIG. 5 is a water treatment flowchart of a precipitation process unit according to the first embodiment of the present invention;
FIG. 6 is a water treatment flowchart of a concentrated water pre-treatment unit according to the first embodiment of the present invention;
FIG. 7 is a water treatment flowchart of a chlor-alkali process unit according to the first embodiment of the present invention;
FIG. 8 is a block diagram illustrating a desalination system for enabling hydrogen production that is not according to the invention and present for illustration purposes only;
FIGS. 9 and 10 are views illustrating charge and discharge and desalination processes of a seawater battery unit;
FIG. 11 is a view illustrating a water treatment process of a desalination unit for hydrogen production; and
FIG. 12 is a view illustrating a process of generating hydrogen gas while concentrated water passes through a chlor-alkali process unit.

### DETAILED DESCRIPTION OF THE INVENTION

A desalination method for enabling hydrogen production according to an embodiment of the present invention includes a desalination process unit in which influent is water-treated through a reverse osmosis process to produce produced water and concentrated water; and a chlor-alkali process unit having an interior space partitioned into an anode section to which the concentrated water is supplied and a cathode section to which the produced water is supplied, wherein the chlor-alkali process unit uses solar electrical energy to generate chlorine gas from salt of the concentrated water through a chemical reaction at the anode section with the concentrated water as an electrolyte, and generate hydrogen gas and sodium hydroxide through a chemical reaction at the cathode section with the produced water as an electrolyte.

Hereinafter, a desalination method for enabling hydrogen production according to an exemplary embodiment of the present invention will be described with reference to the accompanying drawings. Even though the drawings refer to a system, the invention is related to a method.

### ● First embodiment

The present invention is provided to produce hydrogen gas, which is a future energy source, from concentrated water conventionally discharged as a waste stream in a seawater desalination process, and to self-produce chlorine, sodium hydroxide, and hydrochloric acid consumed in the desalination process.

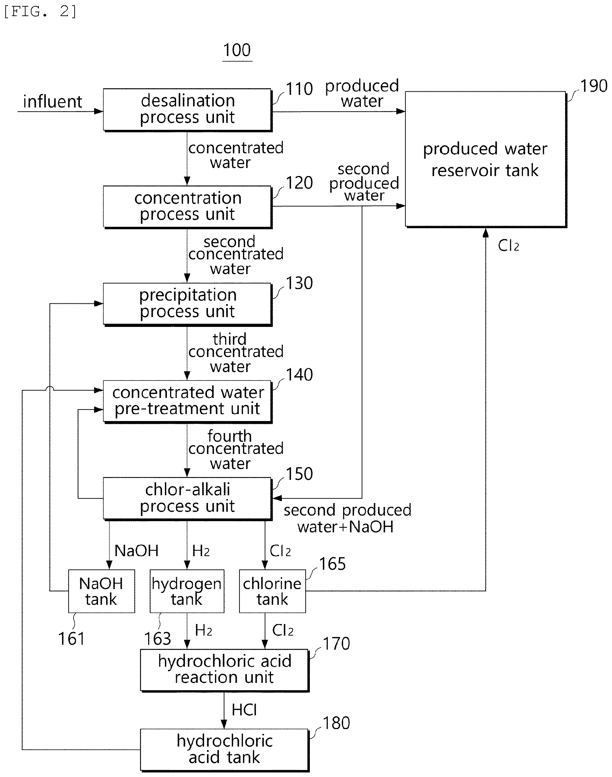

Referring to FIG. 2, a desalination system 100 capable of producing hydrogen includes a desalination process unit 110, a concentration process unit 120, a precipitation process unit 130, a concentrated water pre-treatment unit 140, and a chlor-alkali process unit 150, an NaOH tank 161, hydrogen tank 163, a chlorine tank 165, a hydrochloric acid reaction unit 170, a hydrochloric acid tank 180, a produced water reservoir tank 190, and a concentrated water crystallization unit 198.

The desalination process unit 110 is a device that performs water treatment by which influent (e.g., seawater) containing salt undergoes a reverse osmosis process to produce produced water (e.g., fresh water) with salt removed and concentrated water containing concentrated salt.

The desalination process unit 110 includes a high pressure pump 111, a reverse osmosis process unit 112, and an energy recovery unit 113.

The reverse osmosis process unit 112 is a device that performs a reverse osmosis process. The reverse osmosis process unit 112 may be configured to perform the reverse osmosis process several times depending on the degree of salt removal from the influent according to the type of produced water (edible water, agricultural water, industrial water).

The energy recovery unit 113 is a device that receives the concentrated water discharged from the reverse osmosis process unit 112 and recovers the pressure of the concentrated water.

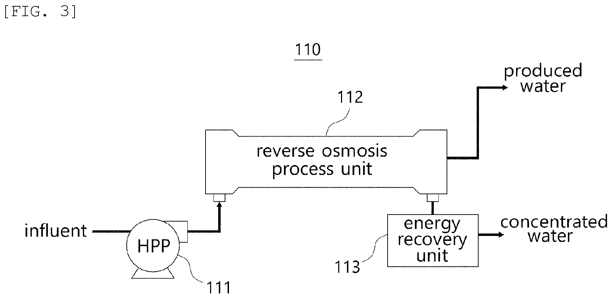

With reference to FIG. 3, a water treatment process of the desalination process unit 110 will be described as follows.

The high pressure pump 111 pumps the influent from sea into the reverse osmosis process unit 112.

The reverse osmosis process unit 112 separates the influent into the produced water and the concentrated water through the reverse osmosis process. The reverse osmosis process used in the seawater desalination process is a known technique, and thus a detailed description thereof will be omitted.

The produced water discharged from the reverse osmosis process unit 112 is stored in the produced water reservoir tank 190.

The concentrated water discharged under a high pressure from the reverse osmosis process unit 112 is introduced into the energy recovery unit 113, and the pressure of the highpressure concentrated water is recovered therein. After energy is recovered by the energy recovery unit 113, the concentrated water is supplied to the concentration process unit 120.

Seawater in general has a salinity of 3.5%. In the case of the concentrated water that has passed through the desalination process unit 110, the salinity thereof is approximately 6%. In a chlor-alkali process which will be described later, a sodium chloride solution of a high concentration of approximately 25% is required as influent, and thus in the present embodiment, a process of concentrating the concentrated water is preceded prior to performing the chlor-alkali process.

The concentration process unit 120 is installed between the desalination process unit 110 and the precipitation process unit 130. The concentration process unit 120 concentrates salt in the concentrated water to a high concentration through a distillation process. The concentration process unit 120 may concentrate the concentrated water having a salinity of 6% to obtain concentrated water having a salinity of approximately 25%.

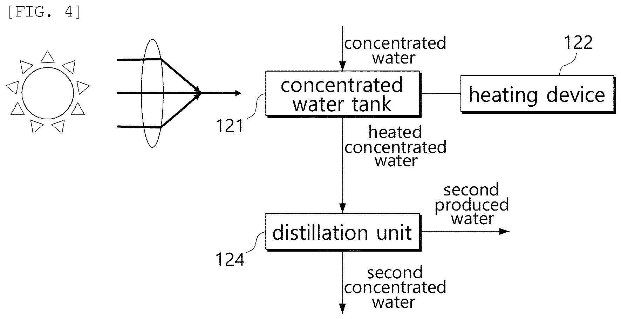

As illustrated in FIG. 4, the concentration process unit 120 includes a concentrated water tank 121, a heating device 122, and a distillation unit 124.

The concentrated water tank 121 is a tank in which the concentrated water having passed through the energy recovery unit 113 is stored. In the concentrated water tank 121, the concentrated water is heated by solar heat or the heating device 122 provided separately. The heated concentrated water is supplied to the distillation unit 124.

The distillation unit 124 separates the concentrated water into a second produced water and a second concentrated water through the distillation process. The distillation process may be performed by selecting one of membrane distillation (MD), multi-stage flash distillation (MSF), and multiple-effect distillation (MED) depending on the flow rate of the concentrated water introduced into the distillation unit 124. The membrane distillation (MD), the multi-stage flash distillation (MSF), or multiple-effect distillation (MED) is a known distillation process, and thus a description thereof will be omitted in the present embodiment.

The second produced water is supplied from the concentration process unit 120 to the produced water reservoir tank 190. Further, a part of the second produced water may be supplied to a cathode section 155 of the chlor-alkali process unit 150. In the cathode section 155, the second produced water is mixed with a sodium hydroxide solution and then used as an electrolyte of a cathode.

The second concentrated water is concentrated water having a salinity higher than that of the concentrated water. The second concentrated water is supplied from the concentration process unit 120 to the precipitation process unit 130.

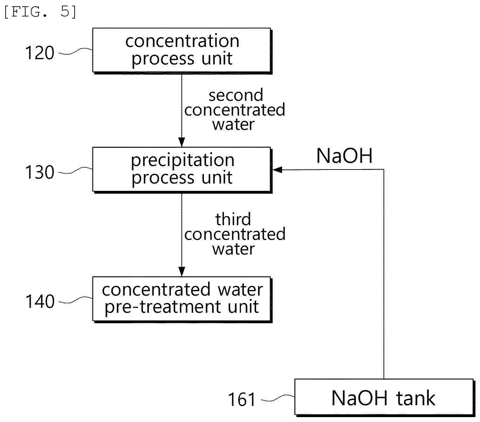

As illustrated in FIG. 5, the precipitation process unit 130 is installed between the concentration process unit 120 and the concentrated water pre-treatment unit 140. The sedimentation process unit 130 receives the second concentrated water from the concentration process unit 120 and chemically treats the second concentrated water with sodium hydroxide to generate a precipitation reaction of the second concentrated water. Here, a part of sodium hydroxide is produced in the chlor-alkali process unit 150.

In the precipitation process unit 130, the second concentrated water is water-treated to produce a third concentrated water with divalent cations (Ca²⁺, Mg²⁺, etc.) removed, by a precipitation reaction with sodium hydroxide. The third concentrated water is concentrated water which results from removal of divalent cations from the second concentrated water. The third concentrated water is discharged from the precipitation process unit 130 and then supplied to the concentrated water pre-treatment unit 140.

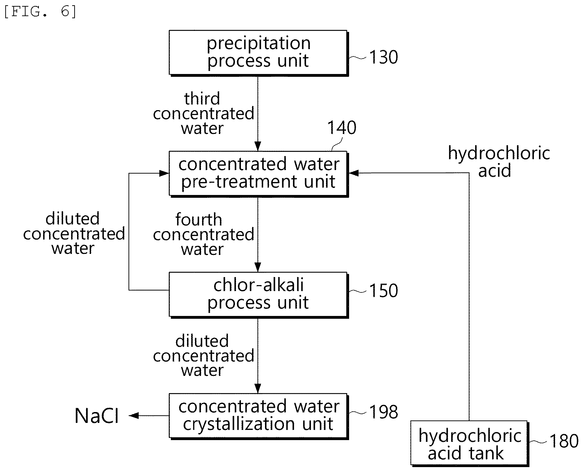

As illustrated in FIG. 6, the concentrated water pre-treatment unit 140 is installed between the precipitation process unit 130 and the chlor-alkali process unit 150. The concentrated water pre-treatment unit 140 injects hydrochloric acid into the third concentrated water supplied from the precipitation process unit 130, thereby water-treating the third the third concentrated water to produce a fourth concentrated water having a lower pH than the third concentrated water.

In the present invention, by lowering the pH of the concentrated water before introduction into the chlor-alkali process unit 150, it is possible to prevent the concentrated water from reacting with chlorine gas in the chlor-alkali process unit 150 to produce hypochlorous acid (HClO) and other compounds.

The concentrated water pre-treatment unit 140 receives the third concentrated water, diluted concentrated water, and hydrochloric acid, and discharges the fourth concentrated water. The third concentrated water is concentrated water having a higher pH than the fourth concentrated water. The diluted concentrated water is concentrated water having a lower salinity than the fourth concentrated water. Further, hydrochloric acid is a chemical used to control the pH of the concentrated water. In the present embodiment, hydrochloric acid is prepared from chlorine gas and hydrogen gas generated in the chlor-alkali process unit 150. Hydrochloric acid is supplied from the hydrochloric acid tank 180 to the concentrated water pre-treatment unit 140.

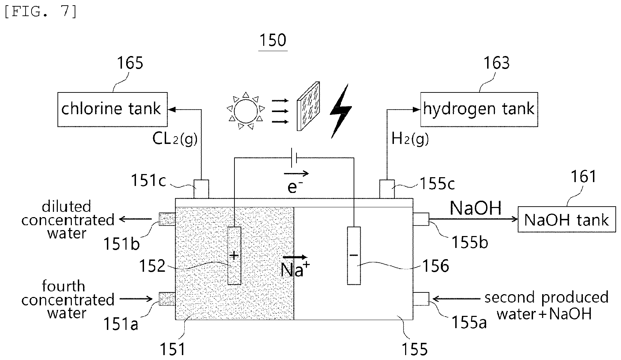

Hereinafter, the chlor-alkali process unit will be described with reference to FIG. 7.

The chlor-alkali process unit 150 has an internal space partitioned into an anode section 151 and the cathode section 155 with a separation membrane interposed therebetween. The anode section 151 is provided with an anode 152. The cathode section 156 is provided with a cathode 155. The anode 152 and the cathode 156 are electrically connected to each other.

The chlor-alkali process unit 150 electrolyzes the concentrated water by means of solar electrical energy to produce chlorine gas at the anode section 151, and hydrogen gas and sodium hydroxide at the cathode section 155.

The anode section 151 is provided with a first fluid inlet 151a, a first fluid outlet 151b, and a first gas outlet 151c. The first fluid inlet 151a is a passage connected to the precipitation process unit 130 to allow introduction of the fourth concentrated water into the passage. The first fluid outlet 151b is a passage for allowing discharge of the diluted concentrated water through the passage. The first fluid outlet 151b is connected to the precipitation process unit 130. The first gas outlet 151c is a passage for allowing discharge of chlorine gas through the passage. The first gas outlet 151c is connected to the chlorine tank 165.

The cathode section 155 is provided with a second fluid inlet 155a, a second fluid outlet 155b, and a second gas outlet 155c. The second fluid inlet 155a is a passage for allowing introduction of the produced water mixed with the sodium hydroxide solution into the passage.

The second fluid inlet 155a is a passage connected to a discharge passage for the second produced water of the concentration process unit 120 to receive the second produced water. At this time, the sodium hydroxide solution is supplied from the NaOH tank 161 in conjunction with the second produced water. Alternatively, the second fluid inlet 155a may be connected to the produced water reservoir tank 190 to receive the produced water from the produced water reservoir tank 190.

The second fluid outlet 155b is a passage for allowing discharge of the sodium hydroxide solution through the passage. The second fluid outlet 155b is connected to the NaOH tank 161. The second gas outlet 155c is a passage for allowing discharge of hydrogen gas through the passage. The second gas outlet 155c is connected to the hydrogen tank 163.

With reference to FIG. 7, a process in which chlorine gas is produced at the anode section 151 of the chlor-alkali process unit 150 will be described as follows.

When power is supplied to the chlor-alkali process unit 150, current is applied to the anode 152 and the cathode 156. At this time, as a power source used, solar electrical energy produced from solar energy may be used.

When current is applied to the anode 152 and the cathode 156 of the chlor-alkali process unit 150, electrons (e) migrate from the anode 152 to the cathode 156. The fourth concentrated water stored in the anode section 151 is an electrolyte of the anode 152, and according to the following Formula (1), causes a chemical reaction.

2NaCl (aq) → 2Na⁺(aq) +Cl₂(g) +2e⁻............ Formula (1)

According to the Formula (1), salt (NaCl) contained in the fourth concentrated water is decomposed into sodium ions and chlorine gas.

Sodium ions migrate from the anode section 151 to the cathode section 155 through the separation membrane that separates the anode section 151 and the anode section 155 from each other.

Chlorine gas is collected to be stored in the chlorine tank 165. Chlorine gas may be supplied to the produced water reservoir tank 190 to be used as a chemical to disinfect the produced water. Further, chlorine gas may be supplied to the hydrochloric acid reaction unit 170 to be used as a raw material for producing hydrochloric acid.

In the present invention, it is possible to disinfect the produced water with chlorine gas produced in the chlor-alkali process unit 150, without requiring use of a separate chlorine chemical, and self-produce hydrochloric acid thereby reducing treatment cost of chemicals consumed for pH control in the water treatment process.

As salt contained in the fourth concentrated water is removed by the chemical reaction according to the Formula (1), the salinity of the fourth concentrated water is lowered. In the present embodiment, concentrated water having a lower salinity than the fourth concentrated water is referred to as diluted concentrated water.

The diluted concentrated water is discharged from the anode section 151 to the concentrated water pre-treatment unit 140. In the present invention, by allowing the diluted concentrated water to be discharged to the concentrated water pre-treatment unit 140 without being directly discharged to sea, it is possible to prevent environmental pollution due to the diluted concentrated water being directly discharged to sea.

A process of producing hydrogen gas and sodium hydroxide at the cathode section 155 of the chlor-alkali process unit 150 will be described as follows.

The second produced water is controlled in pH with sodium hydroxide and then provided to the cathode section 155. The second produced water is fresh water which results from water treatment in the concentration process unit 120. The second produced water is an electrolyte of the cathode 156. Sodium hydroxide is produced in the chlor-alkali process unit 150.

At the cathode section 155 of the chlor-alkali process unit 150, with the second produced water as an electrolyte, the produced water is electrolyzed into hydrogen gas and hydroxyl groups (OH-) to produce hydrogen gas. The chemical formula for producing hydrogen gas is Formula (2).

Hydrogen gas is stored in the hydrogen tank 163 through the second gas outlet 155c. Hydrogen gas may be used as hydrogen energy.

2H_{2O}(l) + 2e⁻ → H₂(g) + 2OH⁻(aq) .............. Formula (2)

2Na⁺(aq) + 20H⁻(aq) → 2NaOH (aq) ............... Formula (3)

At the cathode section 155 of the chlor-alkali process unit 150, sodium hydroxide is produced by a chemical reaction between sodium ions resulting from decomposition of salt of the concentrated water, and hydroxyl groups (OH-). The chemical formula for producing sodium hydroxide is Formula (3).

The sodium hydroxide solution is stored in the NaOH tank 161 through the second fluid outlet 155b. The sodium hydroxide solution is used to control the pH of fluid in the course of water treatment of the influent.

Sodium hydroxide is used as a chemical to control the pH of the produced water introduced into he cathode section 155 of the above-described chlor-alkali process unit 150. Further, sodium hydroxide is used as a chemical to control the pH of the concentrated water and/or produced water of the desalination process unit 110 and/or precipitation process unit 130.

In the present invention, by injecting the sodium hydroxide solution to the influent to increase the pH of the influent, it is possible to increase the removal rate of certain substances such as boron or silica from the influent undergoing the reverse osmosis process, and further, it is possible to recover alkalinity by conversion of carbon dioxide that has undergone the reverse osmosis process into carbonate ions or bicarbonate ions. Additionally, in the present invention, by injecting the sodium hydroxide solution into the produced water having a low pH after mineral injection, it is possible to prevent corrosion of a pipe network through which the produced water flows.

Hydrochloric acid is produced by the following process.

Chlorine gas and hydrogen gas produced in the chlor-alkali process unit 150 are individually supplied to the hydrochloric acid reaction unit 170. The chemical formula for producing hydrochloric acid is Formula (4). Hydrochloric acid produced in the hydrochloric acid reaction unit 170 is stored in the hydrochloric acid tank 180.

H₂(g) + Cl₂(g) → 2HCl(l) ............... Formula (4)

In the present invention, by self-producing hydrochloric acid from chlorine gas and hydrogen gas produced in the chlor-alkali process unit 150, and by using hydrochloric acid as a chemical to control the pH of the concentrated water, it is possible to reduce cost of chemicals consumed during the operation of the desalination system for enabling hydrogen production.

The concentrated water crystallization unit 198 removes moisture from the diluted concentrated water through a crystallization process to crystallize the diluted concentrated water into salt (NaCl). In the crystallization process, the dilute concentrated water is heated, so that salt in the diluted concentrated water crystallizes as moisture in the dilute concentrated water is evaporated and removed as vapor.

In the present invention, by crystallizing the high-salinity second concentrated water into salt (NaCl), it is possible to recycle crystallized salt (NaCl) or dispose the crystallized salt as waste. In the present invention, it is possible to prevent destruction of marine ecosystems due to high-concentration concentrated water being discharged to sea.

### ● Second embodiment

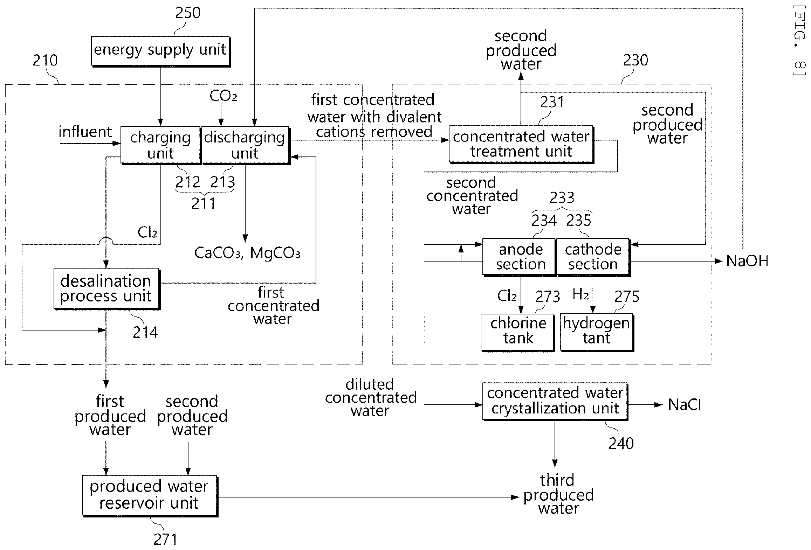

Hereinafter, a desalination system 200 capable of producing hydrogen will be described with reference to FIGS. 8 to 12.

The following example shown in FIGS. 8 to 12 is not according to the invention and is present for illustration purposes only. The scope of the protection of the invention is solely determined by the appended set of claims.

Referring to FIG. 8, the desalination system 200 capable of producing hydrogen includes an influent treatment unit 210, a desalination unit 230 for hydrogen production, a concentrated water crystallization unit 240, and an energy supply unit 250, a produced water reservoir tank 271, a chlorine tank 273, a hydrogen tank 275, and an NaOH tank 277.

The influent treatment unit 210 will be described with reference to FIGS. 8 to 10. In the present embodiment, the influent treatment unit 210 is composed of a seawater battery unit 211 and a desalination process unit 214.

The seawater battery unit 211 charges electrical energy through an oxidation/reduction reaction of ions in influent. During discharging, electrical energy may be used as an energy source for the desalination process unit 214.

The seawater battery unit 211 includes a charging unit 212 and a discharging unit 213. The charging unit 212 is electrically connected to the energy supply unit 250. The energy supply unit 250 generates new renewable energy such as solar power generation, hydropower generation, and wind power generation, and applies produced electrical energy to the charging unit 212.

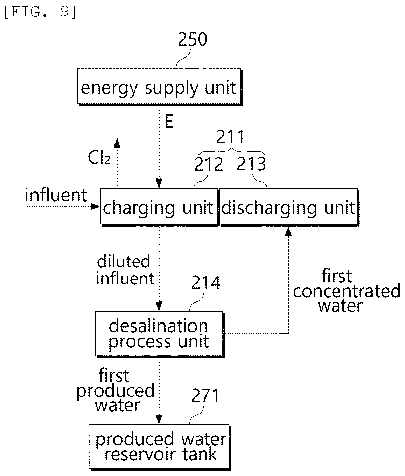

With reference to FIG. 9, a charging process of the seawater battery unit 211 will be described as follows.

During charging of the seawater battery unit 211, when new renewable energy is applied to the charging unit 212, a chemical reaction occurs in the charging unit 212 according to Formula (1) with the influent as an electrolyte, causing salt in the influent to be electrolyzed into sodium ions and chlorine ions.

Chlorine ions are oxidized to chlorine gas to be collected in the charging unit 212 and stored in the chlorine tank 273. Sodium ions migrate from the charging unit 212 to the discharging unit 213 through a separation membrane.

2NaCl (aq) → 2Na⁺(aq) +Cl₂(g) +2e⁻............ Formula (1)

Chlorine gas may be used as a chemical to disinfect a first produced water produced in the desalination process unit 214. Chlorine gas consumed to disinfect the first produced water is self-produced in the seawater battery unit 211, and thus it is possible to reduce cost of chemical treatment.

Salt in the influent is removed by electrolysis according to Formula (1). In the present embodiment, the influent of which the salinity is lowered through the charging process of the charging unit 212 will be referred to as diluted influent.

The diluted influent is discharged from the charging unit 212 to the desalination process unit 214. The desalination process unit 214 water-treats the diluted influent through a reverse osmosis process. While passing through the desalination process unit 214, the diluted influent is water-treated to produce a first produced water and a first concentrated water. The first produced water is stored in the produced water reservoir tank 271. The first concentrated water is supplied to the discharging unit 213. The first concentrated water has a higher salinity than the diluted influent.

The reverse osmosis process may be performed several times depending on the degree of salt removal from the influent according to the type of produced water (edible water, agricultural water, industrial water). The reverse osmosis process used in the seawater desalination process is a known technique, and thus a detailed description thereof will be omitted.

By desalinating the diluted influent through the reverse osmosis process, it is possible to reduce the amount of energy used to operate the reverse osmosis process, the diluted influent resulting from removal of salt from the influent to have a lowered salinity by electrolyzing the influent during charging of the seawater battery unit 211 to generate chlorine gas.

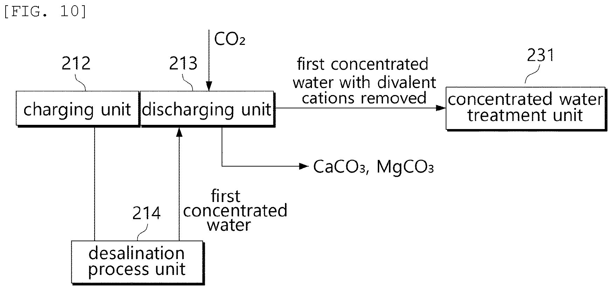

With reference to FIG. 10, a discharging process of the seawater battery unit 211 will be described as follows.

During discharging of the seawater battery unit 211, the first concentrated water and carbon dioxide are supplied to the discharging unit 213. The first concentrated water is concentrated to a higher salinity than the influent while passing through the desalination process unit 214.

During discharging of the discharging unit 213, divalent cations (e.g., Ca²⁺ or Mg²⁺) contained in the first concentrated water and carbon dioxide cause a chemical reaction, causing the divalent cations to be removed from the first concentrated water. Carbon dioxide is reduced to carbonate ions (CO₃²⁻).

Calcium ions (Ca²⁺) chemically react with carbonate ions (CO₃²⁻) to precipitate as calcium carbonate (CaCO₃). Magnesium ions (Mg²⁺) are chemically react with carbonate ions (CO₃²⁻) to precipitate as magnesium carbonate (MgCO₃).

During discharging of the discharging unit 213, divalent cations are removed from the first concentrated water through a chemical reaction between the first concentrated water and carbon dioxide. During discharging of the discharging unit 213, sodium is oxidized to sodium ions, thereby increasing the salinity of the first concentrated water with divalent cations removed.

By adsorbing carbon dioxide (CO₂) to remove divalent cations in the concentrated water, for example, calcium ions (Ca²⁺) or magnesium ions (Mg²⁺) during discharging of the seawater battery unit 211, it is possible to prevent scaling due to divalent cations during a concentration process of a concentrated water treatment unit 231, thereby omitting a nanofiltration process and an antiscalant process required for divalent ion removal before concentration of the concentrated water.

During discharging of the discharge unit 213, electrical energy charged in the seawater battery unit 211 is supplied to the desalination process unit 214 and can be used as an energy source for the desalination process unit 214.

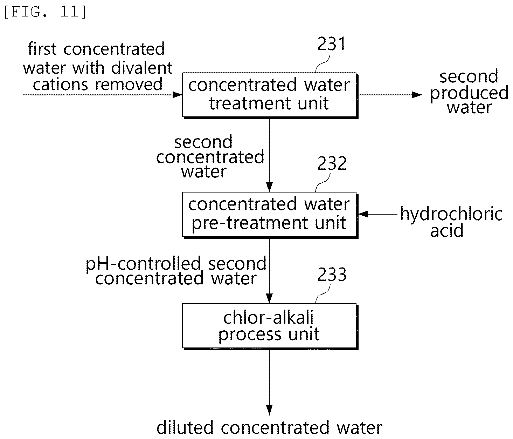

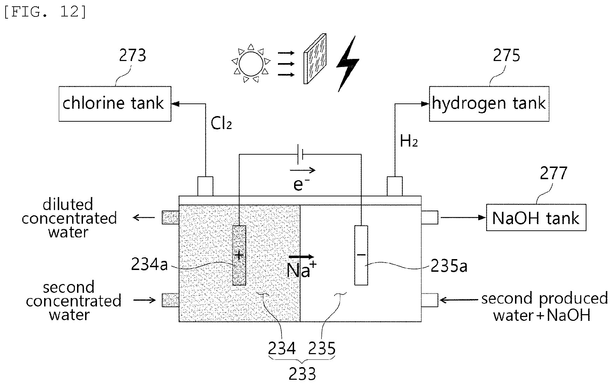

Hereinafter, the desalination unit 230 will be described with reference to FIGS. 11 and 12.

The desalination unit 230 for hydrogen production includes the concentrated water treatment unit 231, a concentrated water pre-treatment unit 232, and a chlor-alkali process unit 233. The concentrated water treatment unit 231 receives the first concentrated water with divalent cations removed, and water-treats the concentrated water through a distillation process to produce a second concentrated water and a second produced water.

The second concentrated water is preferably concentrated to a salinity (24 to 26% NaCl) sufficient to generate hydrogen gas in the chlor-alkali process unit 233, which will be described later, through the distillation process. The second concentrated water has a higher salinity than the first concentrated water. The second concentrated water is controlled in pH in the concentrated water pre-treatment unit 232 and then supplied to the chlor-alkali process unit 233. The second produced water is stored in the produced water reservoir tank 271.

A distillation process may be performed by selecting one of membrane distillation (MD), multi-stage flash distillation (MSF), and multiple-effect distillation (MED). The membrane distillation (MD), the multi-stage flash distillation (MSF), or multiple-effect distillation (MED) is a known distillation process, and thus a description thereof will be omitted in the present embodiment.

The concentrated water pre-treatment unit 232 adjusts the pH of the second concentrated water to a pH lower than that of the second concentrated water by injecting hydrochloric acid into the second concentrated water. Hydrochloric acid is a chemical used to control the pH of the concentrated water. Hydrochloric acid can be prepared from chlorine gas and hydrogen gas generated in the chlor-alkali process unit 233.

By lowering the pH of the second concentrated water before introduction into the chlor-alkali process unit 233, it is possible to prevent the second concentrated water from reacting with chlorine gas in the chlor-alkali process unit 233 to produce hypochlorous acid (HClO) and other compounds.

Hereinafter, the chlor-alkali process unit 233 will be described with reference to FIG. 12.

The chlor-alkali process unit 233 has an internal space partitioned into an anode section 234 and the cathode section 235 with a separation membrane interposed therebetween. The anode section 234 is provided with an anode 234a. The cathode section 235 is provided with a cathode 235a. The anode 234a and the cathode 235a are electrically connected to each other.

The chlor-alkali process unit 233 electrolyzes the concentrated water by means of solar electrical energy to produce chlorine gas at the anode section 234, and hydrogen gas and sodium hydroxide at the cathode section 235. The anode section 234 is connected to the chlorine tank 273 and the concentrated water crystallization unit 240. The cathode section 235 is connected to the hydrogen tank 275 and the NaOH tank 277.

A process in which chlorine gas is produced at the anode section 234 of the chlor-alkali process unit 233 will be described as follows. When power is supplied to the chlor-alkali process unit 233, current is applied to the anode 234a and the cathode 235a. At this time, as a power source used, new renewable energy of the energy supply unit 250 may be used.

When current is applied to the anode 234a and the cathode 235a of the chlor-alkali process unit 233, electrons (e) migrate from the anode 234a to the cathode 235a. The second concentrated water stored in the anode section 234 is an electrolyte of the anode 234a, and according to the following Formula (1), causes a chemical reaction.

2NaCl (aq) → 2Na⁺(aq) +Cl₂(g) +2e⁻............ Formula (1)

According to the Formula (1), salt (NaCl) contained in the second concentrated water is decomposed into sodium ions and chlorine gas.

Sodium ions migrate from the anode section 234 to the cathode section 235 through the separation membrane that separates the anode section 234 and the anode section 235 from each other.

Chlorine gas is collected to be stored in the chlorine tank 273. Chlorine gas may be supplied to the produced water reservoir tank 271 to be used as a chemical to disinfect the produced water. Further, chlorine gas may be used as a raw material for producing hydrochloric acid.

It is possible to disinfect the produced water with chlorine gas produced in the chlor-alkali process unit 233, without requiring use of a separate chlorine chemical, and self-produce hydrochloric acid thereby reducing treatment cost of chemicals consumed for pH control in the water treatment process.

As salt contained in the second concentrated water is removed by the chemical reaction according to the Formula (1), the salinity of the second concentrated water is lowered. In the present embodiment, concentrated water having a lower salinity than the second concentrated water is referred to as diluted concentrated water. The diluted concentrated water is discharged from the anode section 234 to the concentrated water crystallization unit 240.

A process of producing hydrogen gas and sodium hydroxide at the cathode section 235 of the chlor-alkali process unit 233 will be described as follows.

The second produced water is controlled in pH with sodium hydroxide and then provided to the cathode section 235. The second produced water is fresh water which results from water treatment in the concentration process unit 120. The second produced water is an electrolyte of the cathode 235a. Sodium hydroxide is produced in the chlor-alkali process unit 233.

At the cathode section 235 of the chlor-alkali process unit 233, with the second produced water as an electrolyte, the produced water is electrolyzed into hydrogen gas and hydroxyl groups (OH-) to produce hydrogen gas. The chemical formula for producing hydrogen gas is Formula (2).

Hydrogen gas is collected in the cathode section 235 and stored in the hydrogen tank 275. Hydrogen gas may be used as hydrogen energy.

2H₂O(l) + 2e⁻ → H₂(g) + 2OH⁻(aq) .............. Formula (2)

At the cathode section 235 of the chlor-alkali process unit 233, sodium hydroxide is produced by a chemical reaction between sodium ions resulting from decomposition of salt of the concentrated water, and hydroxyl groups (OH-). The chemical formula for producing sodium hydroxide is Formula (3).

2Na⁺(aq) + 2OH⁻(aq) → 2NaOH(aq) ............... Formula (3)

Sodium hydroxide is stored in the NaOH tank 277. Sodium hydroxide is used as a chemical to control the pH of the produced water introduced into the cathode section 235 of the above-described chlor-alkali process unit 233. Further, sodium hydroxide is used as a chemical to control the pH of the concentrated water and/or produced water.

By injecting sodium hydroxide to the influent to increase the pH of the influent, it is possible to increase the removal rate of certain substances such as boron or silica from the influent undergoing the reverse osmosis process, and further, it is possible to recover alkalinity by conversion of carbon dioxide that has undergone the reverse osmosis process into carbonate ions or bicarbonate ions. Additionally, by injecting sodium hydroxide into the produced water having a low pH after mineral injection, it is possible to prevent corrosion of a pipe network through which the produced water flows.

The diluted concentrated water discharged from the chlor-alkali process unit 233 is discharged to the concentrated water crystallization unit 240. The diluted concentrated water is concentrated water that results from removal of chlorine gas from the second concentrated water to have a diluted concentration by electrolyzing the second concentrated water. The diluted concentrated water has a lower salinity than the second concentrated water.

The concentrated water crystallization unit 240 removes moisture from the diluted concentrated water through a crystallization process to crystallize the diluted concentrated water into salt (NaCl). In the crystallization process, the dilute concentrated water is heated, so that salt in the diluted concentrated water crystallizes as moisture in the dilute concentrated water is evaporated and removed as vapor. The concentrated water crystallization unit 240 may cool the vapor generated during the crystallization process to produce a third produced water. The third produced water is stored in the produced water reservoir tank 271.

By crystallizing the high-salinity second concentrated water into salt (NaCl), it is possible to recycle crystallized salt (NaCl) or dispose the crystallized salt as waste. It is possible to prevent destruction of marine ecosystems due to high-concentration concentrated water being discharged to sea.

The present invention described above is not limited by the above-described embodiments and accompanying drawings, and those skilled in the art will appreciate that various modifications, additions and substitutions are possible, without departing from the scope of the invention as disclosed in the accompanying claims.

The present invention can find application in the field of producing hydrogen gas, which is a future energy source, from concentrated water discharged as the waste stream in a seawater desalination process.

## Claims

1. A method for desalination for enabling hydrogen production, the method comprising:
a desalination process using a desalination process unit (110) in which influent is water-treated through a reverse osmosis process to produce produced water and concentrated water; and
a chlor-alkali process using a chlor-alkali process unit (150) having an interior space partitioned into an anode section (151) to which the concentrated water is supplied and a cathode section (155, 156) to which the produced water is supplied,
wherein the chlor-alkali process unit (150) uses solar electrical energy to generate chlorine gas from salt of the concentrated water through a chemical reaction at the anode section (151) with the concentrated water as an electrolyte, and generate hydrogen gas and sodium hydroxide through a chemical reaction at the cathode section (155, 156) with the produced water as an electrolyte, further comprising:
a concentration process using a concentration process unit (120) provided between the desalination process using a desalination process unit (110) and the chlor-alkali process unit (150), and water-treating the concentrated water through a distillation process to produce a second concentrated water concentrated to a higher salinity than the concentrated water, and a second produced water that results from removal of the salt from the concentrated water, further comprising:
a precipitation process unit (130) provided between the concentration process unit (120) and the chlor-alkali process unit (150), injecting the sodium hydroxide into the second concentrated water supplied from the concentration process unit (120), and water-treating the second concentrated water through a precipitation reaction to produce a third concentrated water with divalent cations removed, further comprising:
a concentrated water pre-treatment unit (140) provided between the precipitation process unit (130) and the chlor-alkali process unit (150), injecting hydrochloric acid to the third concentrated water supplied from the precipitation process unit (130), and water-treating the third concentrated water to produce a fourth concentrated water having a lower pH than the third concentrated water, wherein the chlor-alkali process unit (150) receives the fourth concentrated water from the concentrated water pre-treatment unit (140)to the anode section (151), generates the chlorine gas in the fourth concentrated water through the chemical reaction at the anode section (151) with the fourth concentrated water as an electrolyte, and discharges diluted concentrated water that results from removal of the salt from the fourth concentrated water to the concentrated water pre-treatment unit (140).

2. The desalination process of claim of 1, further comprising:
a produced water reservoir tank (190) storing the produced water received from the desalination process unit (110);
a chlorine tank (165) storing the chlorine gas supplied from the anode section (151), and connected to the produced water reservoir tank (190) to supply the chlorine gas to the produced water reservoir tank (190);
a hydrogen tank (163) storing the hydrogen gas supplied from the cathode section (155, 156); and
an NaOH tank (161) storing the sodium hydroxide generated through the chemical reaction at the cathode section (155, 156), and supplying the sodium hydroxide to the produced water introduced into the cathode section (155, 156),
wherein the chlorine gas is supplied to the produced water reservoir tank (190) to disinfect the produced water, and the sodium hydroxide controls a pH of the produced water introduced into the cathode section (155, 156).

3. The desalination process of claim of 2, further comprising:
a hydrochloric acid reaction unit (170) individually connected to the chlorine tank (165) and the hydrogen tank (163), and producing hydrochloric acid through a chemical reaction between the supplied chlorine gas and hydrogen gas; and
a hydrochloric acid tank (180) storing the hydrochloric acid, and connected to the concentrated water pre-treatment unit (140)to supply the hydrochloric acid to the concentrated water pre-treatment unit (140).

4. The desalination process of claim 1, wherein at the cathode section (155, 156), the produced water is electrolyzed into the hydrogen gas and hydroxyl groups (OH-) to produce the hydrogen gas, and the sodium hydroxide is produced by a chemical reaction between sodium ions resulting from decomposition of the salt of the concentrated water, and the hydroxyl groups (OH-).

5. The desalination process of claim 1, wherein the desalination process unit (110) comprises: a reverse osmosis process unit (112) in which the influent is separated into the produced water and the concentrated water by means of high pressure as the reverse osmosis process is performed; and
an energy recovery unit (113) connected to the reverse osmosis process unit (112) and the concentration process unit (120), receiving the concentrated water from the reverse osmosis process unit (112) to transfer a pressure of the concentrated water to the influent, and providing the concentrated water with reduced pressure to the concentration process unit (120).

## Patentansprüche

1. Verfahren zur Entsalzung zur Ermöglichung der Wasserstoffproduktion, wobei das Verfahren Folgendes umfasst:
einen Entsalzungsprozess unter Verwendung einer Entsalzungsprozess-Einheit (110), in der ein Zufluss durch einen Umkehrosmose-Prozess mit Wasser behandelt wird, um produziertes Wasser und konzentriertes Wasser zu erzeugen; und
ein Chloralkaliverfahren unter Verwendung einer Chloralkaliverfahrenseinheit (150) mit einem Innenraum, der in einen Anodenabschnitt (151), dem das konzentrierte Wasser zugeführt wird, und einen Kathodenabschnitt (155, 156), dem das erzeugte Wasser zugeführt wird, unterteilt ist,
wobei die Chloralkali-Prozesseinheit (150) elektrische Solarenergie verwendet, um Chlorgas aus dem Salz des konzentrierten Wassers durch eine chemische Reaktion im Anodenabschnitt (151) mit dem konzentrierten Wasser als Elektrolyt zu erzeugen und Wasserstoffgas und Natriumhydroxid durch eine chemische Reaktion im Kathodenabschnitt (155, 156) mit dem erzeugten Wasser als Elektrolyt zu erzeugen, und ferner umfassend:
einen Konzentrationsprozess unter Verwendung einer Konzentrationsprozess-Einheit (120), die zwischen dem Entsalzungsprozess unter Verwendung einer Entsalzungsprozess-Einheit (110) und der Chloralkali-Prozess-Einheit (150) vorgesehen ist, und eine Wasserbehandlung des konzentrierten Wassers durch einen Destillationsprozess, um ein zweites konzentriertes Wasser, das auf einen höheren Salzgehalt als das konzentrierte Wasser konzentriert ist, und ein zweites erzeugtes Wasser, das aus der Entfernung des Salzes aus dem konzentrierten Wasser resultiert, zu erzeugen, ferner umfassend:
eine Fällungsprozess-Einheit (130), die zwischen der Konzentrationsprozess-Einheit (120) und der Chloralkali-Prozess-Einheit (150) vorgesehen ist, wobei das Natriumhydroxid in das zweite konzentrierte Wasser injiziert wird, das von der Konzentrationsprozess-Einheit (120) zugeführt wird, und das zweite konzentrierte Wasser durch eine Fällungsreaktion wässrig behandelt wird, um ein drittes konzentriertes Wasser zu erzeugen, aus dem zweiwertige Kationen entfernt sind, ferner umfassend:
eine Vorbehandlungseinheit für konzentriertes Wasser (140), die zwischen der Fällungsprozess-Einheit (130) und der Chloralkali-Prozess-Einheit (150) vorgesehen ist, wobei Salzsäure in das von der Fällungsprozess-Einheit (130) gelieferte dritte konzentrierte Wasser injiziert wird, und das dritte konzentrierte Wasser einer Wasserbehandlung unterzieht, um ein viertes konzentriertes Wasser mit einem niedrigeren pH-Wert als das dritte konzentrierte Wasser zu erzeugen, wobei die Chlor-Alkali-Prozesseinheit (150) das vierte konzentrierte Wasser von der konzentrierten Wasser-Vorbehandlungseinheit (140) zum Anodenabschnitt (151) erhält, das Chlorgas in dem vierten konzentrierten Wasser durch die chemische Reaktion am Anodenabschnitt (151) mit dem vierten konzentrierten Wasser als Elektrolyt erzeugt und gibt verdünntes konzentriertes Wasser, das aus der Entfernung des Salzes aus dem vierten konzentrierten Wasser resultiert, an die Vorbehandlungseinheit für konzentriertes Wasser (140) ab.

2. Entsalzungsverfahren nach Anspruch 1, das ferner Folgendes umfasst:
einen Vorratstank für produziertes Wasser (190), der das von der Entsalzungsprozess-Einheit (110) erhaltene produzierte Wasser speichert;
einen Chlortank (165), der das vom Anodenabschnitt (151) gelieferte Chlorgas speichert und mit dem Speichertank (190) für das erzeugte Wasser verbunden ist, um das Chlorgas dem Speichertank (190) für das erzeugte Wasser zuzuführen;
einen Wasserstofftank (163), der das vom Kathodenabschnitt (155, 156) gelieferte Wasserstoffgas speichert; und
einen NaOH-Tank (161), der das durch die chemische Reaktion im Kathodenabschnitt (155, 156) erzeugte Natriumhydroxid speichert und das Natriumhydroxid dem in den Kathodenabschnitt (155, 156) eingeleiteten erzeugten Wasser zuführt,
wobei das Chlorgas dem Vorratsbehälter (190) für das produzierte Wasser zugeführt wird, um das produzierte Wasser zu desinfizieren, und das Natriumhydroxid den pH-Wert des in den Kathodenabschnitt (155, 156) eingeführten produzierten Wassers steuert.

3. Entsalzungsverfahren nach Anspruch 2 umfasst ferner:
eine Salzsäurereaktionseinheit (170), die einzeln mit dem Chlortank (165) und dem Wasserstofftank (163) verbunden ist und Salzsäure durch eine chemische Reaktion zwischen dem zugeführten Chlorgas und Wasserstoffgas erzeugt; und
einen Salzsäuretank (180), in dem die Salzsäure gelagert wird und der mit der Vorbehandlungseinheit für konzentriertes Wasser (140) verbunden ist, um die Salzsäure der Vorbehandlungseinheit für konzentriertes Wasser (140) zuzuführen.

4. Entsalzungsverfahren nach Anspruch 1, wobei in dem Kathodenabschnitt (155, 156) das erzeugte Wasser in das Wasserstoffgas und die Hydroxylgruppen (OH-) elektrolysiert wird, um das Wasserstoffgas zu erzeugen, und das Natriumhydroxid durch eine chemische Reaktion zwischen Natriumionen, die aus der Zersetzung des Salzes des konzentrierten Wassers resultieren, und den Hydroxylgruppen (OH-) erzeugt wird.

5. Entsalzungsverfahren nach Anspruch 1, wobei die Entsalzungsprozess-Einheit (110) umfasst: eine Umkehrosmose-Prozess-Einheit (112), in der der Zufluss in das produzierte Wasser und das konzentrierte Wasser mittels Hochdruck getrennt wird, während der Umkehrosmose-Prozess durchgeführt wird; und
eine Energierückgewinnungseinheit (113), die mit der Umkehrosmose-Prozesseinheit (112) und der Konzentrationsprozesseinheit (120) verbunden ist, das konzentrierte Wasser von der Umkehrosmose-Prozesseinheit (112) empfängt, um einen Druck des konzentrierten Wassers auf das einfließende Wasser zu übertragen, und das konzentrierte Wasser mit reduziertem Druck an die Konzentrationsprozesseinheit (120) liefert.

## Revendications

1. Méthode de dessalement permettant la production d'hydrogène, comprenant
un procédé de dessalement utilisant une unité de dessalement (110) dans laquelle l'influent est traité par osmose inverse pour produire de l'eau de production et de l'eau concentrée ; et
un procédé de chlore-alcali utilisant une unité de traitement du chlore-alcali (150) ayant un espace intérieur divisé en une section anodique (151) à laquelle l'eau concentrée est fournie et une section cathodique (155, 156) à laquelle l'eau produite est fournie,
dans lequel l'unité de traitement du chlore et de la soude (150) utilise l'énergie électrique solaire pour générer du chlore gazeux à partir du sel de l'eau concentrée par une réaction chimique dans la section anodique (151) avec l'eau concentrée comme électrolyte, et pour générer de l'hydrogène gazeux et de l'hydroxyde de sodium par une réaction chimique dans la section cathodique (155, 156) avec l'eau produite comme électrolyte, comprenant en outre :
un procédé de concentration utilisant une unité de concentration (120) située entre le processus de dessalement utilisant une unité de dessalement (110) et l'unité de traitement du chlore et de la soude (150), et le traitement de l'eau concentrée par un processus de distillation pour produire une deuxième eau concentrée à une salinité plus élevée que l'eau concentrée, et une deuxième eau produite qui résulte de l'élimination du sel de l'eau concentrée, comprenant en outre :
une unité de traitement par précipitation (130) située entre l'unité de traitement par concentration (120) et l'unité de traitement par chlore et alcali (150), injectant l'hydroxyde de sodium dans la deuxième eau concentrée fournie par l'unité de traitement par concentration (120), et traitant l'eau de la deuxième eau concentrée par une réaction de précipitation pour produire une troisième eau concentrée dont les cations divalents ont été éliminés, comprenant en outre :
une unité de prétraitement de l'eau concentrée (140) située entre l'unité de traitement par précipitation (130) et l'unité de traitement par chlore et alcali (150), injectant de l'acide chlorhydrique dans la troisième eau concentrée fournie par l'unité de traitement par précipitation (130), et traitant l'eau concentrée pour produire une quatrième eau concentrée ayant un pH inférieur à celui de la troisième eau concentrée, l'unité de traitement au chlore et à la soude (150) reçoit la quatrième eau concentrée de l'unité de prétraitement de l'eau concentrée (140) à la section anodique (151), génère le chlore gazeux dans la quatrième eau concentrée par la réaction chimique à la section anodique (151) avec la quatrième eau concentrée comme électrolyte, et rejette l'eau concentrée diluée qui résulte de l'élimination du sel de la quatrième eau concentrée à l'unité de prétraitement de l'eau concentrée (140).

2. Le procédé de dessalement de la revendication 1, comprenant en outre :
un réservoir d'eau produite (190) stockant l'eau produite reçue de l'unité de dessalement (110) ;
un réservoir de chlore (165) stockant le chlore gazeux fourni par la section anodique (151), et connecté au réservoir d'eau produite (190) pour fournir le chlore gazeux au réservoir d'eau produite (190) ;
un réservoir d'hydrogène (163) stockant l'hydrogène gazeux fourni par la section cathodique (155, 156) ; et
un réservoir de NaOH (161) stockant l'hydroxyde de sodium généré par la réaction chimique à la section cathodique (155, 156), et fournissant l'hydroxyde de sodium à l'eau produite introduite dans la section cathodique (155, 156),
dans lequel le chlore gazeux est fourni au réservoir d'eau produite (190) pour désinfecter l'eau produite, et l'hydroxyde de sodium contrôle le pH de l'eau produite introduite dans la section cathodique (155, 156).

3. Le procédé de dessalement de la revendication 2, comprenant en outre :
une unité de réaction à l'acide chlorhydrique (170) connectée individuellement au réservoir de chlore (165) et au réservoir d'hydrogène (163), et produisant de l'acide chlorhydrique par une réaction chimique entre le chlore gazeux et l'hydrogène gazeux fournis ; et
un réservoir d'acide chlorhydrique (180) stockant l'acide chlorhydrique et connecté à l'unité de prétraitement de l'eau concentrée (140) pour fournir l'acide chlorhydrique à l'unité de prétraitement de l'eau concentrée (140).

4. Le procédé de dessalement de la revendication 1, dans lequel à la section cathodique (155, 156), l'eau produite est électrolysée en hydrogène gazeux et en groupes hydroxyles (OH-) pour produire de l'hydrogène gazeux, et l'hydroxyde de sodium est produit par une réaction chimique entre les ions sodium résultant de la décomposition du sel de l'eau concentrée, et les groupes hydroxyles (OH-).

5. Le procédé de dessalement de la revendication 1, dans lequel l'unité de dessalement (110) comprend : une unité de traitement par osmose inverse (112) dans laquelle l'influent est séparé en eau produite et en eau concentrée au moyen d'une pression élevée lors de l'exécution du processus d'osmose inverse ; et
une unité de récupération d'énergie (113) connectée à l'unité de traitement par osmose inverse (112) et à l'unité de traitement par concentration (120), recevant l'eau concentrée de l'unité de traitement par osmose inverse (112) pour transférer une pression de l'eau concentrée à l'influent, et fournissant l'eau concentrée avec une pression réduite à l'unité de traitement par concentration (120).
